# EUROPÄISCHE PATENTSCHRIFT

(11) **EP 3 781 078 B1**
(45) Veröffentlichungstag und Bekanntmachung des Hinweises auf die Patenterteilung: **18.01.2023**
(21) Anmeldenummer: 19736295.7
(22) Anmeldetag: 13.06.2019
(51) Int. Cl.: A61C 8/00

(54) **ZAHNIMPLANTAT MIT MEHREREN IMPLANTATTEILEN**
DENTAL IMPLANT HAVING A PLURALITY OF IMPLANT PARTS
IMPLANT DENTAIRE POURVU DE PLUSIEURS PARTIES D'IMPLANT

(30) Priorität: 14.06.2018 DE 102018114213
(43) Veröffentlichungstag der Anmeldung: 24.02.2021
(73) Patentinhaber: Laux, Robert, 71560 Sulzbach/Murr (DE)
(72) Erfinder: Laux, Robert, 71560 Sulzbach/Murr (DE)
(74) Vertreter: Müller, Gottfried
(86) Internationale Anmeldenummer: PCT/DE2019/100543
(87) Internationale Veröffentlichungsnummer: WO 2019/238174

(56) Entgegenhaltungen:
- DE-A1-102004 018 512
- US-A- 641 930
- US-A1- 2012 295 226
- US-A1- 2015 272 709
- US-B2- 9 364 299

## Beschreibung

Die Erfindung bezieht sich auf ein Zahnimplantat mit mehreren Implantatteilen nach dem Oberbegriff des Anspruches 1.

In der EP 1 734 886 B1 wird ein Zahnimplantat mit einem in den Kiefer des Patienten einzusetzenden Basisträger, einem Aufbaupfosten auf dem Basisträger sowie einer Zahnkrone auf dem Aufbaupfosten beschrieben. Der Aufbaupfosten ist auf der der Zahnkrone zugewandten Seite mit einem Friktionskonussektor versehen, an den sich in Umfangsrichtung ein Ausgleichssektor mit nicht-konischer Geometrie anschließt. Auf den Friktionskonussektor und den Ausgleichssektor kann die Zahnkrone aufgesetzt werden, die einen konusförmigen Innenraum aufweist, wobei der Ausgleichssektor am Aufbaupfosten das Zusammensetzen der Zahnimplantate auch bei einer schiefwinkligen Position erleichtert.

Die US 2012/0295226 A1 offenbart ein mehrteiliges Zahnimplantat mit einer Primärkrone, die in einen Basisträger einsetzbar ist und auf die eine Verbindungshülse und eine Sekundärkrone aufsetzbar sind. Die Primärkrone weist in ihrem oberen Teil einen Sechskant auf, der in einen korrespondierenden Innensechskant in der Verbindungshülse einsetzbar ist.

Die US 641,930 offenbart ein Zahnimplantat mit einer Krone und einer Wurzel, die über einen Pin miteinander verbunden sind. Der Pin wird in eine Ausnehmung in der Krone eingesetzt, in die aus Stabilitätsgründen eine Metallhülse eingebracht ist. - Im montierten Zustand ragt der Pin in eine korrespondierende Ausnehmung in der Wurzel hinein.

Aus der US 2015/0272709 A1 ist ein Zahnimplantat mit einem Basisträger, einer Primärkrone und einer Sekundärkrone bekannt, wobei die Primärkrone einen länglichen Grundquerschnitt aufweist und in eine korrespondierende Ausnehmung in der Sekundärkrone hineinragt.

Auch die US 9,364,299 B2 offenbart ein mehrteiliges Zahnimplantat, das eine Verbindungshülse umfasst, welche mit einem leicht konischen Außenmantel versehen ist, in den über den Umfang verteilt insgesamt vier Einfräsungen eingebracht sind.

Die DE 10 2004 018 512 A1 offenbart ein Implantatteil in einem Zahnimplantat mit einem konusförmigen Grundkörper, der mit einem zweiten Implantatteil lösbar zu verbinden ist. Der Grundkörper besitzt zwei Sektoren, von denen ein Sektor mit konischer Geometrie ausgeführt und mit dem zweiten Implantatteil lösbar und kraftschlüssig zu verbinden ist. Die Mantelflächen der beiden Sektoren schließen gegenüber der Grundkörperlängsachse unterschiedliche Neigungswinkel ein.

Der Erfindung liegt das Problem zugrunde, ein Zahnimplantat zu schaffen, bei dem das Zusammensetzen und Lösen der Implantatteile erleichtert ist.

Diese Aufgabe wird erfindungsgemäß mit den Merkmalen des Anspruches 1 gelöst. Die Unteransprüche geben zweckmäßige Weiterbildungen an.

Das erfindungsgemäße Zahnimplantat umfasst zwei Implantatteile, die eine Primärkrone und eine Sekundärkrone bilden und lösbar miteinander zu verbinden sind. Die Primärkrone sitzt vorteilhafterweise auf einem Basisträger des Zahnimplantates auf, der in den Kiefer des Patienten einsetzbar und beispielsweise über eine Verbindungsschraube mit dem Basisträger verbindbar ist. Auf den Aufbaupfosten bzw. die Primärkrone ist die Sekundärkrone lösbar aufsetzbar, die in bevorzugter Ausführung Träger einer Verblendung, Brücke oder Prothese ist. Die Primärkrone bildet insbesondere einen Aufbaupfosten, der zwischen dem Basisträger und der Sekundärkrone liegt. Die Sekundärkrone wird auch als Zahnkrone bezeichnet.

Eines der Implantatteile - die Primärkrone oder die Sekundärkrone - weist einen erhabenen Grundkörper auf, der im verbundenen Zustand in eine zugeordnete Ausnehmung im jeweils anderen Implantatteil hineinragt. An dem erhabenen Grundkörper ist mindestens eine Friktionsseitenwand gebildet, die reibschlüssig mit einer Innenwand verbunden ist, welche die Ausnehmung in dem anderen Implantatteil begrenzt. Aufgrund des Reibschlusses ist eine hinreichend feste und sichere Verbindung zwischen den Implantatteilen, also zwischen Primärkrone und Sekundärkrone gebildet.

Der Grundkörper an dem einen Implantatteil weist über seinen Umfang mindestens zwei unterschiedliche Seitenwände auf, von denen eine Seitenwand die Friktionsseitenwand bildet zur reibschlüssigen Verbindung mit dem anderen Implantatteil, wohingegen die mindestens eine weitere Seitenwand als eine abgeschrägte Ausgleichswand ausgebildet ist. Diese Ausgleichswand ist in der Weise winklig zur Längsachse des Implantatteils gerichtet, dass die Querschnittsfläche des Grundkörpers an dessen Verbindungsbasis mit dem tragenden Implantatteil durch die Ausgleichswand erweitert wird. Der Winkel zwischen der Ausgleichswand und der Längsachse des Implantatteils ist größer als 0°. Die mindestens eine Friktionsseitenwand liegt dagegen parallel zur Längsachse des Implantatteils.

Somit weist der erhabene Grundkörper an dem einen Implantatteil mindestens eine Friktionsseitenwand und mindestens eine Ausgleichswand entlang seiner Umfangsseite auf, wobei die Friktionsseitenwand, deren Ebene parallel zur Längsachse des Implantatteils verläuft, im verbundenen Zustand auf Kontakt zu der zugeordneten Innenwand in der Ausnehmung im anderen Implantatteil liegt und über die Friktion die gewünschte Verbindung mit dem anderen Implantatteil herstellt. Die Ausgleichswand ist dagegen abgeschrägt ausgebildet, so dass die Ebene der Ausgleichswand winklig zur Längsachse des Implantatteils ausgerichtet ist und der Winkel größer als 0° beträgt.

Die Ausgleichswand liegt im montierten Zustand vorzugsweise ohne Kontakt zu einer Innenwand in der Ausnehmung im anderen Implantatteil und ermöglicht sowohl beim Zusammenfügen als auch beim Lösen eine Änderung der Relativwinkellage zwischen den beiden Implantatteilen, was sowohl das Zusammenfügen als auch das Lösen erleichtert. Beim Zusammenfügen kann das zweite Implantatteil, welches die Ausnehmung aufweist, in einer ersten Winkellage auf den erhabenen Grundkörper des ersten Implantatteils aufgesetzt werden, in der nicht zwingend ein Reibkontakt zwischen der Friktionsseitenwand und einer Innenwand der aufnehmenden Ausnehmung besteht. Anschließend kann das zweite Implantatteil in eine andere Winkellage gegenüber dem ersten Implantatteil versetzt werden, in der die Friktionsseitenwand auf Kontakt zur Innenwand in der Ausnehmung steht und eine Reibverbindung zwischen den Implantatteilen hergestellt ist.

Beim Lösen der Verbindung kann zunächst die Winkelposition zwischen den Implantatteilen geändert werden, um den Reibkontakt zu lösen, und anschließend das zweite Implantatteil vom ersten Implantatteil abgezogen werden.

Aufgrund der Schrägstellung der Ausgleichswand ist vorteilhafterweise ein Hohlraum zwischen dem Grundkörper des ersten Implantatteils und der aufnehmenden Ausnehmung des anderen Implantatteils gebildet, wobei dieser Hohlraum den Bewegungsausgleich zwischen den Implantatteilen sowohl beim Zusammenfügen als auch beim Lösen ermöglicht. In einer weiteren vorteilhaften Ausführung ist kein Hohlraum gebildet; es ist auch möglich, dass sich die Ausgleichswand im gleichen Winkel in der Ausnehmung im anderen Implantatteil wiederfindet.

Ein weiterer Vorteil der erfindungsgemäßen Ausführung liegt darin, dass verschiedene Grundquerschnittsformen des erhabenen Grundkörpers am ersten Implantatteil bzw. der zugeordneten Ausnehmung im zweiten Implantatteil möglich sind. Es kommen rechteckförmige Querschnittsformen, ggf. mit abgerundeten Ecken in Betracht. Der erhabene Grundkörper am ersten Implantatteil und die zugeordnete Ausnehmung im zweiten Implantatteil besitzen grundsätzlich die gleiche Querschnittsgeometrie, jedoch mit Ausnahme der abgeschrägten Ausgleichswand, die eine Seitenwand des erhabenen Grundkörpers bildet. Die Ausnehmung im zweiten Implantatteil kann ohne abgeschrägte Innenwand ausgebildet sein. Sämtliche Innenwände, die die Ausnehmung im zweiten Implantatteil begrenzen, verlaufen parallel zur Längsachse des Implantatteils.

Es reicht grundsätzlich aus, den erhabenen Grundkörper mit genau einer abgeschrägten Ausgleichwand und mehreren senkrechten Friktionsseitenwänden auszubilden. In alternativer Ausbildung ist es auch möglich, mindestens zwei Ausgleichswände abgeschrägt auszubilden und genau eine oder mehrere weitere Seitenwände als Friktionsseitenwand auszuführen.

Die Seitenwände des Grundkörpers können jeweils in sich eben ausgebildet sein. Es ist aber auch möglich, eine oder mehrere bzw. sämtliche Seitenwände gekrümmt auszubilden, beispielsweise als Zylindersektor, wobei sich die Sektoren jeweils über ein Winkelsegment erstrecken, das kleiner als 360° ist, insbesondere maximal 180° beträgt.

Der Winkel der abgeschrägten Ausgleichswand gegenüber der Längsachse des Implantatteils beträgt vorzugweise mindestens 3° und maximal 30°. Innerhalb dieses Winkelbereichs sind sämtliche Winkel möglich, unter der die Ausgleichswand gegenüber der Längsachse abgeschrägt ist. Gegebenenfalls kommen auch noch größere Winkel als 30° der Ausgleichswand gegenüber der Längsachse des Implantatteils in Betracht, beispielsweise Winkel bis 45°.

Die Ausgleichswand erstreckt sich in Umfangsrichtung vorteilhafterweise über ein Winkelsegment von maximal 180°, gegebenenfalls maximal 90°. Es kann ausreichend sein, dass die Ausgleichswand sich in Umfangsrichtung über ein Winkelsegment von mindestens 45° erstreckt.

Gemäß einer weiteren vorteilhaften Ausführung befindet sich der erhabene Grundkörper auf der Primärkrone, die Ausnehmung dagegen in der Sekundärkrone, die auf die Primärkrone aufgesetzt wird. Es ist aber auch möglich, eine umgekehrte Anordnung mit dem erhabenen Grundkörper auf der Sekundärkrone und der Ausnehmung in der Primärkrone vorzusehen.

Der erhabene Grundkörper ist beispielsweise als ein Quader mit rechteckförmiger Grundquerschnittsform bzw. Querschnittsgeometrie ausgebildet, dessen eine Seite von einer abgeschrägten Ausgleichswand gebildet ist, insbesondere eine Schmalseite der Rechteckform. Die übrigen Seitenwände des Grundkörpers verlaufen dagegen senkrecht, ihre Ebene liegt parallel zur Längsachse des Implantatteils.

Die obenliegende Seite des erhabenen Grundkörpers kann im montierten Zustand auf Kontakt zum Grund der Ausnehmung im anderen Implantatteil anliegen. Es ist alternativ auch möglich, im montierten Zustand einen Abstand zwischen der obenliegenden Seite des erhabenen Grundkörpers und dem Grund der aufnehmenden Ausnehmung vorzusehen.

Die Primärkrone oder zumindest ein Teil der Primärkrone ist um ihre Längsachse rotierbar angeordnet. Es ist beispielsweise möglich, dass die Primärkrone zweiteilig ausgebildet ist und ein Primärkronenoberteil, welches der Sekundärkrone zugewandt ist, und ein Primärkronenunterteil umfasst, welches dem Basisträger zugewandt ist, wobei das Primärkronenoberteil gegenüber dem Primärkronenunterteil rotierbar gelagert ist. Dies ermöglicht es, dass das Primärkronenoberteil in verschiedenen Winkellagen eingestellt werden kann, was einen zusätzlichen Freiheitsgrad darstellt. Das Primärkronenoberteil und das Primärkronenunterteil können hierbei ineinandergreifende Konusformen mit einem Innenkonus und einem Außenkonus aufweisen. Die Konusform ermöglicht einerseits die gewünschte Relativrotation des Primärkronenoberteils gemäß dem Primärkronenunterteil, andererseits ist eine Friktionskonusverbindung zwischen Primärkronenoberteil und Primärkronenunterteil möglich.

In einer alternativen Ausführung sind das Primärkronenoberteil und das Primärkronenunterteil einteilig ausgebildet. Das Primärkronenunterteil ist in dem im Kiefer zu verankernden Basisträger rotierbar gelagert. Das Primärkronenunterteil weist auf der dem Primärkronenoberteil abgewandten Seite einen axial überstehenden Abschnitt auf, der beispielsweise zylindrisch oder konisch ausgebildet ist und in eine zugeordnete Ausnehmung im Basisträger hineinragt. Die Ausnehmung im Basisträger kann gegebenenfalls komplementär zu dem axial überstehenden Abschnitt des Primärkronenunterteils ausgebildet sein, oder, in alternativer Ausführung, zum Beispiel als Innenmehrkant, insbesondere als Innensechskant, in den der zylindrische, axial überstehende Abschnitt des Primärkronenunterteils hineinragt und in dem sich der Abschnitt des Primärkronenunterteils um seine Längsachse drehen kann.

Die Erfindung bezieht sich auf ein Zahnimplantat mit zwei Implantatteilen, die eine Primärkrone und eine Sekundärkrone bilden und lösbar miteinander zu verbinden sind. Der Grundaufbau dieses Zahnimplantates entspricht dem Grundaufbau des vorbeschriebenen Zahnimplantates. Ein Implantatteil, vorzugsweise die Primärkrone, weist den erhabenen Grundkörper auf, der im verbundenen Zustand in eine Ausnehmung im anderen Implantatteil hineinragt. Vorteilhafterweise steht mindestens eine Seitenwand des erhabenen Grundkörpers in Kontakt mit einer die Ausnehmung im anderen Implantatteil begrenzenden Innenwand, wobei diese Seitenwand eine Friktionsseitenwand bilden kann, die reibschlüssig mit der Innenwand verbunden ist. Gegebenenfalls kommt aber auch ein Kontakt zwischen der Seitenwand und der Innenwand ohne Reibschluss in Betracht; in diesem Fall erfolgt die Verbindung zwischen den Implantatteilen beispielsweise über einen Rast- oder Formschluss zwischen dem auf den Grundkörper aufgesetzten Implantatteil und dem den Grundkörper tragenden Implantatteil. Ein derartiger Rast- oder Formschluss wird zum Beispiel durch Einrasten einer stirnseitigen Verbreiterung an der den Grundkörper umgreifenden Stirnseite der Wand mit einer zugehörigen Rastaufnahme im Bereich der Basis des Grundkörpers an dem den Grundkörper tragenden Implantatteil hergestellt.

Der erhabene Grundkörper weist eine eckige Querschnittsgeometrie auf. Mindestens eine Seitenwand des erhabenen Grundkörpers ist als eine abgeschrägte Ausgleichswand ausgebildet, die bezogen auf die Längsachse des Implantatteils winklig ausgerichtet ist, wobei der Winkel zwischen der Ausgleichswand und der Längsachse des Implantatteils größer als 0° beträgt und die Winkelausrichtung in der Weise gestaltet ist, dass die Querschnittsfläche des Grundkörpers zu dessen Verbindungsbasis mit dem Implantatteil hin erweitert wird.

Mindestens eine weitere Seitenwand des Grundkörpers schließt ebenfalls einen Winkel zur Längsachse des Implantatteils ein, wobei auch dieser Winkel vorteilhafterweise größer als 0° ist, wobei gegebenenfalls ein Winkel gleich 0° möglich ist. Vorteilhafterweise ist auch der Winkel der mindestens einen weiteren Seitenwand, die nicht die Ausgleichswand bildet, so ausgerichtet, dass die Querschnittsfläche des Grundkörpers zu dessen Verbindungsbasis mit dem Implantatteil hin erweitert wird. Der Winkel der Ausgleichswand gegenüber der Längsachse unterscheidet sich von dem Winkel der mindestens einen weiteren Seitenwand zur Längsachse.

Auch in dieser Ausführung ist sowohl das Zusammenfügen der Implantatteile als auch das Lösen erleichtert, da die Relativwinkellage zwischen den beiden Implantatteilen aufgrund der schräg gestellten Ausgleichswand beim Füge- bzw. Lösevorgang verändert werden kann. Beim Zusammenfügen kann das zweite Implantatteil mit der Ausnehmung in einer ersten Winkellage auf den erhabenen Grundkörper des ersten Implantatteils aufgesetzt werden, ohne dass bereits ein Reibkontakt oder ein form- bzw. rastschlüssiger Kontakt zwischen Implantatteilen besteht. Anschließend kann das zweite Implantatteil in die endgültige Winkellage gegenüber dem ersten Implantatteil versetzt werden, welche die gewünschte Einbaulage darstellt und in der die feste Verbindung zwischen den Implantatteilen hergestellt ist, entweder durch Reibkontakt oder durch Form- bzw. Rastschluss. Beim Lösen wird entsprechend in umgekehrter Reihenfolge die Winkellage zwischen den Implantatteilen verändert.

Die eckige Querschnittsgeometrie des erhabenen Grundkörpers lässt sich in einfacher Weise herstellen. Der Grundkörper besitzt eine rechteckförmige Querschnittsgeometrie, wobei die schräg gestellte Ausgleichswand vorzugsweise an der Schmalseite angeordnet ist, gegebenenfalls aber auch an einer Längsseite der rechteckigen Querschnittsgeometrie angeordnet sein kann. Die Seitenwände sind jeweils als in sich ebene Wände ausgebildet.

Die Schmalseiten des Grundkörpers mit rechteckförmiger Querschnittsgeometrie können gegebenenfalls abgerundet sein. Die Längsseiten des Grundkörpers mit rechteckförmiger Querschnittsgeometrie verlaufen vorteilhafterweise parallel zueinander.

Es kommen alternativ zu rechteckförmigen Querschnittsgeometrien auch sonstige eckige Querschnittsgeometrien in Betracht, beispielsweise eine dreieckförmige Querschnittsgeometrie (Grundkörper in Tetraederform) oder eine fünf- oder sechseckige Querschnittsgeometrie oder eine Trapezform.

Des Weiteren ist es möglich, dass der Grundkörper eine eckige Grundquerschnittsgeometrie mit einer oder mehreren abgerundeten Ecken und/oder gebogenen Seitenwänden aufweist. Es ist beispielsweise möglich, dass die Querschnittsgeometrie des Grundkörpers trapezförmig ist und die Schmalseite des Trapezes abgerundet ist. Die winklig zueinander stehenden Seitenwände des Trapezes können in sich geradlinig oder gebogen sein.

Außerdem kommen Ausführungen mit eckiger Querschnittsgeometrie in Betracht, bei denen zwei oder mehr Ecken der Querschnittsgeometrie zu einer oder zu mehreren in sich ebenen, geradflächigen Seitenwänden gehören und darüber hinaus eine oder mehrere weitere Seitenwände gekrümmt ausgebildet sind. Beispielsweise ist es möglich, dass der erhabene Grundkörper eine geradflächige Seitenwand aufweist, die von einer sich über einen Winkelbereich von 180° gekrümmten Seitenwand zu dem Grundkörper ergänzt wird.

Eine rechteckförmige Querschnittsgeometrie des Grundkörpers mit zwei parallelen Längsseiten und geradflächigen oder gerundeten bzw. gebogenen Schmalseiten hat den weiteren Vorteil, dass bei einer Drehung des den Grundkörper aufweisenden Implantatteils um die Implantatlängsachse die parallelen Längsseiten in eine Position verdreht werden können, in der die Ebene der Längsseiten parallel zur Aufsetzrichtung des weiteren Implanatteils liegt. Handelt es sich beispielsweise bei dem Implantatteil mit dem rechteckigen Grundkörper um die Primärkrone, auf die die Sekundärkrone aufsetzbar ist, so kann auch bei schiefwinkliger Einbaulage die Primärkrone mit dem Grundkörper so weit um die Primärkronenlängsachse verdreht werden, bis die Längsseiten des Grundkörpers parallel zur Aufsetzrichtung der Sekundärkrone ausgerichtet sind.

Vorteilhafterweise ist genau eine Seitenwand als eine Ausgleichswand ausgebildet. Des Weiteren ist es vorteilhaft, dass der Winkel der mindestens einen weiteren Seitenwand des Grundkörpers zur Längsachse des Implantatteils kleiner ist als der Winkel der Ausgleichswand zur Längsachse des Implantatteils. Es kann beispielsweise zweckmäßig sein, dass der Winkel der mindestens einen weiteren Seitenwand in einem Winkelbereich von 2° bis 10° liegt, wohingegen der Winkelbereich der stärker schräg gestellten Ausgleichswand in einem Winkelbereich von 3° bis 30°, insbesondere von 10° bis 25° liegt.

Ein weiterer Aspekt der Erfindung bezieht sich auf ein Zahnimplantat mit zwei als Primärkrone und Sekundärkrone ausgebildeten Implantatteilen, die lösbar zu verbinden sind, wobei ein Implantatteil einen erhabenen Grundkörper aufweist, der im verbundenen Zustand in eine Ausnehmung im anderen Implantatteil hineinragt. Mindestens eine Seitenwand des erhabenen Grundkörpers bildet eine Friktionsseitenwand, die in eine reibschlüssig mit einer die Ausnehmung im anderen Implantatteil begrenzenden Innenwand verbundene Position verbringbar ist. Die Ausnehmung im anderen Implantatteil weist ein größeres Volumen auf als der erhabene Grundkörper am ersten Implantatteil, so dass zwischen dem erhabenen Grundkörper und der Ausnehmung, in die der Grundkörper hineinragt, ein Freiraum gebildet ist, der einen Ausgleichsraum für einen Winkelausgleich bildet. Der Ausgleichsraum befindet sich zwischen einer Seitenwand des erhabenen Grundkörpers und der zugewandten Innenwand im anderen Implantatteil, die die Ausnehmung begrenzt. Diese Ausführung ermöglicht es, dass zwischen der Aufsetzrichtung des anderen Implantatteils auf das erste Implantatteil, welches den erhabenen Grundkörper aufweist, und der Längsachse des Implantatteils mit dem erhabenen Grundkörper ein Winkel von beispielsweise maximal 10°, maximal 20°, maximal 30° oder mehr bestehen kann, wobei nach dem Aufsetzen das aufgesetzte Implantatteil um eine Querachse verschwenkt werden kann, so dass sich die Position der Längsachse des aufgesetzten Implantatteils ändert. Es kann gegebenenfalls erreicht werden, dass die Längsachse des aufgesetzten Implantatteils in der endgültigen Lage parallel oder koaxial zur Längsachse des Implantatteils mit dem erhabenen Grundkörper ausgerichtet ist. Der Ausgleichsraum zwischen mindestens einer Seitenwand des erhabenen Grundkörpers und einer die Ausnehmung begrenzenden Innenwand der Ausnehmung im anderen Implantatteil ermöglicht diesen Winkelausgleich.

Der Ausgleichsraum kann von einer abgeschrägten Ausgleichswand des erhabenen Grundkörpers begrenzt sein, die unter einem Winkel zur Längsachse des den erhabenen Grundkörper aufweisenden Implantatteils steht, wobei der Winkel größer als 0° ist. Möglich ist aber auch eine senkrecht verlaufende Ausgleichswand, welche den Ausgleichsraum begrenzt und parallel zur Längsachse des den erhabenen Grundkörper aufweisenden Implantatteils verläuft.

Gemäß einer weiteren vorteilhaften Ausführung umfasst der erhabene Grundkörper ein erhabenes Plateau, das sich neben einem Hauptkörper des Grundkörpers befindet und eine geringere axiale Höhe als der Hauptkörper aufweist. An dem Hauptkörper befindet sich die mindestens eine Friktionsseitenwand. Das erhabene Plateau als Bestandteil des erhabenen Grundkörpers bildet gemeinsam mit dem Hauptkörper den Umriss der Ausnehmung im anderen Implantatteil ab, so dass mit dem Aufsetzen des anderen Implantatteils auf den erhabenen Grundkörper die Ausnehmung sowohl den Hauptkörper als auch das erhabene Plateau umschließt und an der Außenseite von Hauptkörper und erhabenem Plateau anliegt. Auf diese Weise ist sichergestellt, dass nach dem Aufsetzen das zweite Implantatteil eine genau definierte Position am ersten Implantatteil, das Träger des erhabenen Grundkörpers ist, einnimmt.

Die Erfindung bezieht sich des Weiteren auf eine Kombination von zwei oder mehr als zwei zueinander beabstandeten Zahnimplantaten, von denen mindestens ein Zahnimplantat, vorzugsweise beide Zahnimplantate in der vorbeschriebenen Weise ausgebildet sind. Diese Kombination von Zahnimplantaten kann Träger beispielsweise einer gemeinsamen Verblendung, Brücke oder Prothese sein, die sich zwischen den Sekundärkronen der beiden Zahnimplantate erstreckt. Bei einer Drehung des den Grundkörper aufweisenden Implantatteils, beispielsweise der Primärkrone, insbesondere des Primärkronenoberteils um die Implantatlängsachse können die parallelen Längsseiten des Grundkörpers in eine Position verdreht werden, in der die Ebene der Längsseiten parallel zur Aufsetzrichtung des weiteren Implanatteils, insbesondere der Sekundärkrone liegt. Aufgrund der abgeschrägten Ausgleichswand kann die Verblendung, Brücke oder Prothese zwischen den Zahnimplantaten auch in Fällen aufgesetzt und wieder gelöst werden, in denen die Längsachsen der Zahnimplantate nicht-parallel zueinander ausgebildet sind. Es kann ggf. zweckmäßig sein, dass sich die Zahnimplantate eine gemeinsame Sekundärkrone teilen.

Weitere Vorteile und zweckmäßige Ausführungen sind den weiteren Ansprüchen, der Figurenbeschreibung und den Zeichnungen zu entnehmen. Es zeigen:
- Fig. 1: in Explosionsdarstellung ein Zahnimplantat mit einem Basisträger, einer zweiteiligen Primärkrone und einer auf die Primärkrone aufsetzbaren Sekundärkrone einschließlich einer Verbindungsschraube zur Befestigung der Primärkrone im Basisträger, wobei die Primärkrone Träger eines erhabenen Grundkörpers ist, auf den die Sekundärkrone aufsetzbar ist,
- Fig. 2: eine Schnittdarstellung durch ein Zahnimplantat während der Montage, jedoch ohne Sekundärkrone,
- Fig. 3: eine weitere Schnittdarstellung durch das Zahnimplantat nach erfolgter Montage, in einer um 90° um die Längsachse verdrehten Darstellung, ohne Sekundärkrone,
- Fig. 4: in einer ersten Seitenansicht die Primärkrone,
- Fig. 5: in einer zweiten Seitenansicht die Primärkrone mit aufgesetzter Sekundärkrone,
- Fig. 6: die Primärkrone in einer ersten perspektivischen Ansicht,
- Fig. 7: die Primärkrone in einer weiteren perspektivischen Ansicht,
- Fig. 8: einen Längsschnitt durch ein Primärkronenoberteil,
- Fig. 9: eine Seitenansicht des Primärkronenoberteils,
- Fig. 10: eine Seitenansicht eines Primärkronenunterteils,
- Fig. 11: eine perspektivische Ansicht einer Sekundärkrone,
- Fig. 12: einen Längsschnitt durch die Sekundärkrone,
- Fig. 13: eine Ansicht von unten auf die Sekundärkrone,
- Fig. 14: eine Fig. 8 entsprechende Darstellung mit einem Längsschnitt durch ein Primärkronenoberteil, jedoch in einer Ausführungsvariante der abgeschrägten Ausgleichswand,
- Fig. 15: eine Primärkrone in einer weiteren nicht erfindungsgemäßenAusführungsvariante, bei der der erhabene Grundkörper eine gebogene Seitenwand aufweist,
- Fig. 16: eine Primärkrone mit einteilig ausgeführtem Primärkronenoberteil und -unterteil,
- Fig. 17: eine Primärkrone in einer weiteren nicht erfindungsgemäßenAusführungsvariante, in der der erhabene Grundkörper kleiner ausgeführt ist als die Ausnehmung in der aufzusetzenden Sekundärkrone,
- Fig. 18: eine weitere nicht erfindungsgemäße Ausführungsvariante einer Primärkrone, in der der erhabene Grundkörper sich aus einem Hauptkörper und einem daran angrenzenden, erhabenen Plateau zusammensetzt.

In den Figuren sind gleiche Bauteile mit gleichen Bezugszeichen versehen.

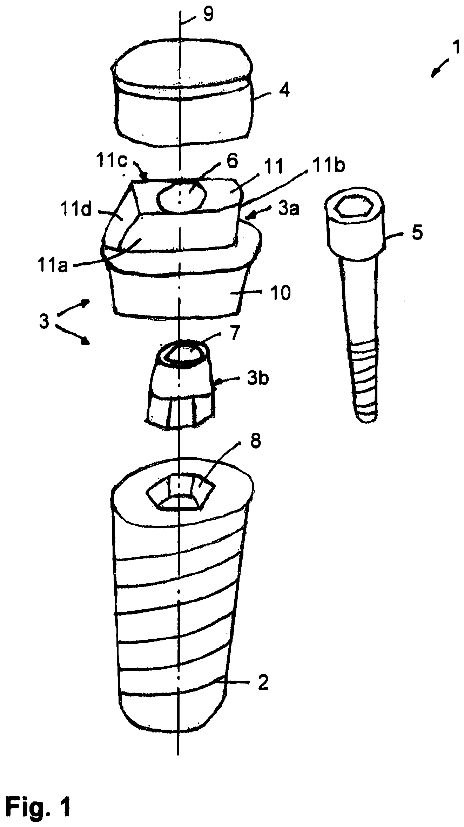

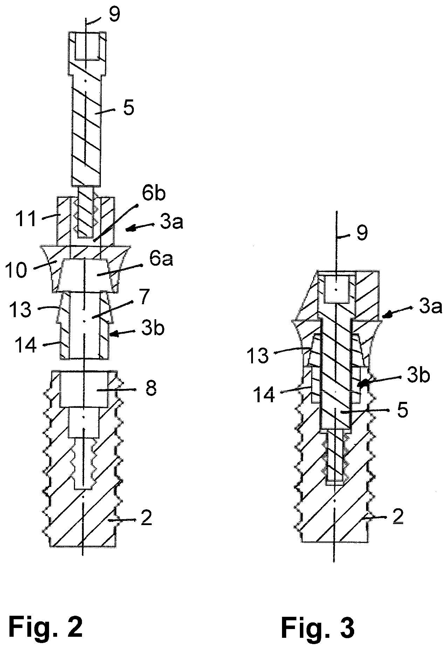

Das in Fig. 1 dargestellte Zahnimplantat 1 umfasst einen in den Kiefer des Patienten einsetzbaren Basisträger 2, einen zweiteiligen Aufbaupfosten 3, der eine Primärkrone bildet, sowie eine Sekundärkrone bzw. Zahnkrone 4. Die Primärkrone 3 umfasst ein Primärkronenoberteil 3a und ein Primärkronenunterteil 3b, die im montierten Zustand zusammengesetzt sind. Die Verbindung zwischen Basisträger 2 und Primärkronenoberteil 3a sowie Primärkronenunterteil 3b erfolgt mithilfe einer Verbindungsschraube 5 (siehe auch Fig. 2 und Fig. 3), die durch zentrische Ausnehmungen 6, 7 im Primärkronenoberteil 3a bzw. im Primärkronenunterteil 3b hindurchgeführt und in eine Sacklochbohrung 8 im Basisträger 2 eingeschraubt wird. Die Verbindung erfolgt entlang der Längsachse 9 des Zahnimplantates 1, die auch zugleich die Längsachse der einzelnen Bestandteile des Zahnimplantates bildet, also die Längsachse des Basisträgers 2, der Primärkrone 3 mit Primärkronenoberteil 3a und Primärkronenunterteil 3b, der Sekundär- bzw. Zahnkrone 4 und der Verbindungsschraube 5.

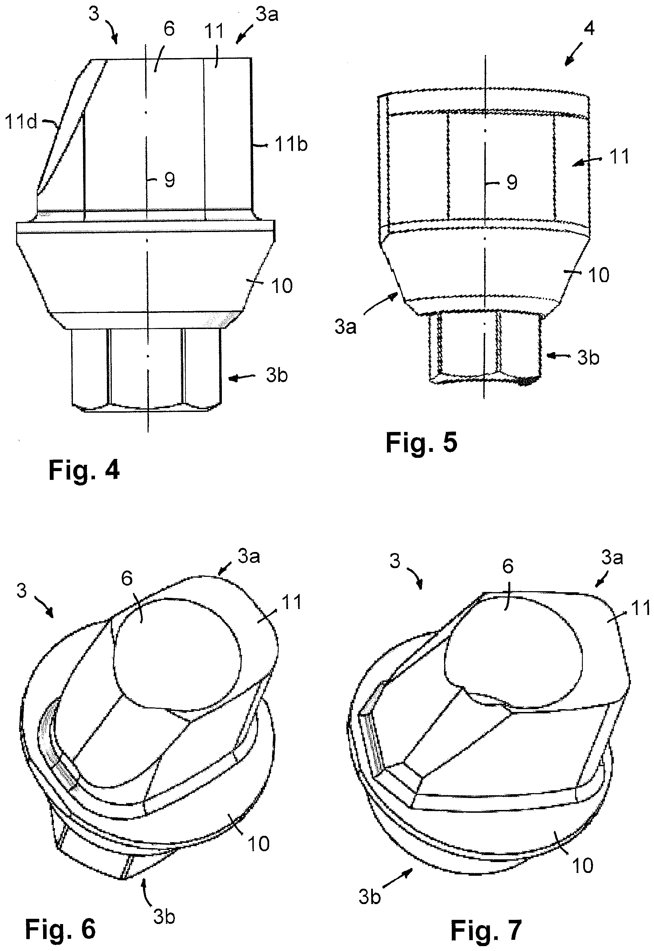

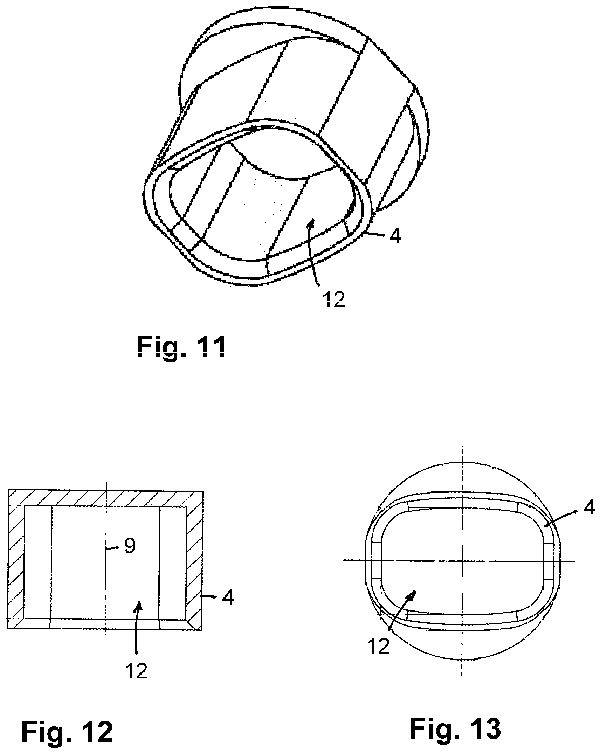

Das Primärkronenoberteil weist, wie den Figuren 1 bis 3 in Verbindung mit den Darstellungen gemäß den Figuren 4 bis 9 zu entnehmen ist, einen Sockel 10 und einen auf dem Sockel angeordneten, erhabenen und über den Sockel 10 axial überstehenden Grundkörper 11 auf, der quaderförmig ausgebildet und auf den die Sekundärkrone 4 aufsetzbar ist. Der Grundkörper 11 weist an seiner Umfangsseite Seitenwände 11a bis 11d auf, von denen die beiden Seitenwände 11a, c an der Längserstreckung sowie eine Seitenwand 11b an einer Schmalseite senkrecht stehen, so dass die Ebene der geradflächigen Seitenwände 11a, b, c parallel zur Längsachse 9 steht. Diese drei Seitenwände 11a, 11b, 11c bilden jeweils eine Friktionsseitenwand, welche jeweils im montierten Zustand an der Innenwand einer Ausnehmung 12 flächig anliegt, die in die Sekundärkrone 4 eingebracht ist (Fig. 11 bis 13). Die Ausnehmung 12 in der Sekundärkrone 4 ermöglicht es, dass die Sekundärkrone 4 so weit auf die Primärkrone 3 aufgesetzt werden kann, dass der Grundkörper 11 des Primärkronenoberteils 3a vollständig innerhalb der Ausnehmung 12 der Sekundärkrone 4 liegt. Der Sockel 10 des Primärkronenoberteils 3a besitzt eine größere Grundfläche als der Grundkörper 11. Die Stirnkante der umlaufenden Wandung, welche die Ausnehmung 12 in der Sekundärkrone 4 begrenzt, liegt auf der Oberseite des Sockels 10 auf.

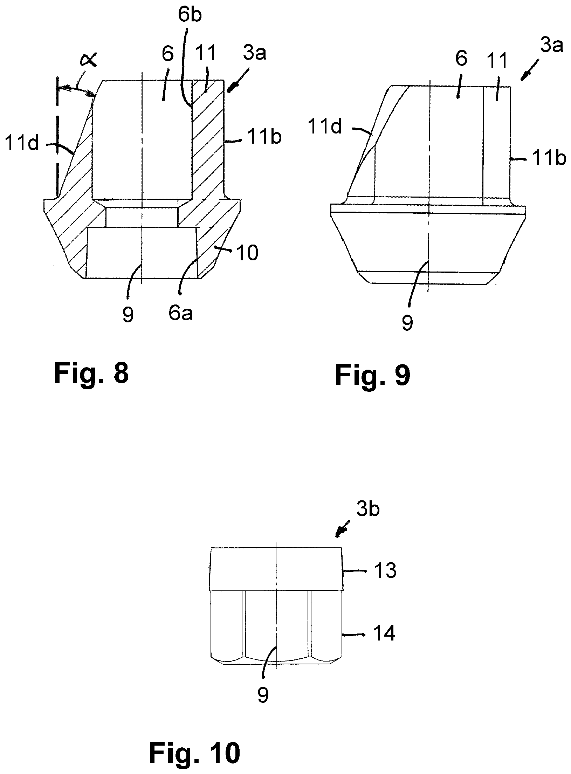

Die vierte Seitenwand des quaderförmigen Grundkörpers 11 bildet eine Ausgleichswand 11d, die abgeschrägt ist und mit der Längsachse 9 einen Winkel α (Fig. 8) einschließt, der im Ausführungsbeispiel bei 20° liegt. Allgemein liegt der Winkel α vorzugweise in einem Winkelbereich zwischen 3° und 45°.

Die Ausnehmung 12 in der Sekundärkrone 4 weist nur senkrechte Innenwände auf, welche sich parallel zur Längsachse erstrecken. Die Abschrägung im Bereich der Ausgleichswand 11d an der Schmalseite des Grundkörpers 11 an der Primärkrone 3 hat zur Folge, dass im montierten Zustand kein Kontakt zwischen der Ausgleichswand 11d und der Innenwand an der Ausnehmung 12 der Sekundärkrone 4 besteht. Aufgrund der Abschrägung der Ausgleichswand 11d mit dem Winkel α kann die Sekundärkrone 4 in verschiedenen Winkelpositionen, welchen von der Achsrichtung der Längsachse 9 abweichen, auf das Primärkronenoberteil 3a aufgesetzt und anschließend in die Verbindungsposition verschwenkt werden, in welcher die Friktionsseitenwände 11a bis 11c des Grundkörpers 11 auf flächigem Kontakt mit der Innenwand im Bereich der Ausnehmung 12 liegen. Umgekehrt kann zum Lösen der Verbindung zunächst die Sekundärkrone 4 gekippt werden, bis die flächige Reibung zwischen den Friktionsseitenwänden 11a bis 11c und der Innenwand an der Ausnehmung 12 gelöst ist. Anschließend kann die Sekundärkrone 4 vom Primärkronenoberteil 3a abgezogen werden.

Das Primärkronenoberteil 3a weist eine axial durchgehende Ausnehmung 6 auf. Der untere Teil 6a der Ausnehmung weitet sich zur nächstliegenden Stirnseite hin geringfügig konisch auf und dient zur Aufnahme eines entsprechend konisch geformten Absatzes 13a des Primärkronenunterteils 3b (Fig. 8, Fig. 10). Die Konizität mit gleichem Konuswinkel der Ausnehmung 6a im Primärkronenoberteil 3a und des Absatzes 13 im Primärkronenunterteil 3b ermöglicht eine Relativverdrehung der beiden Teile 3a, 3b um die Längsachse 9.

Der obere Teil 6b der Ausnehmung 6 dient zur Aufnahme des Schraubenkopfes der Verbindungsschraube 5. Diese ragt auch durch die Ausnehmung 6a hindurch, ebenso durch die Ausnehmung 7 im Primärkronenunterteil 3b und wird mit der Sacklochbohrung 8 im Basisträger 2 verschraubt.

Der untere Absatz 14 des Primärkronenunterteils 3b weist einen Außensechskant auf. Der obere Teil der Sacklochbohrung 8 im Basisträger 2 ist mit einem entsprechenden Innensechskant versehen, in den der Außensechskant 14 des Primärkronenunterteils 3b einsetzbar ist, so dass das Primärkronenunterteil 3b verdrehsicher im Basisträger 2 aufgenommen ist.

Im montierten Zustand, der in Fig. 3 dargestellt ist, ist das Primärkronenunterteil 3b nach außen hin vollständig abgeschirmt. Der untere Absatz 14 ist vollständig in der Sacklochbohrung 8 im Basisträger 2 aufgenommen. Der obere Absatz 13 befindet sich vollständig in der Ausnehmung 6a im Sockel 10 des Primärkronenoberteils 3a.

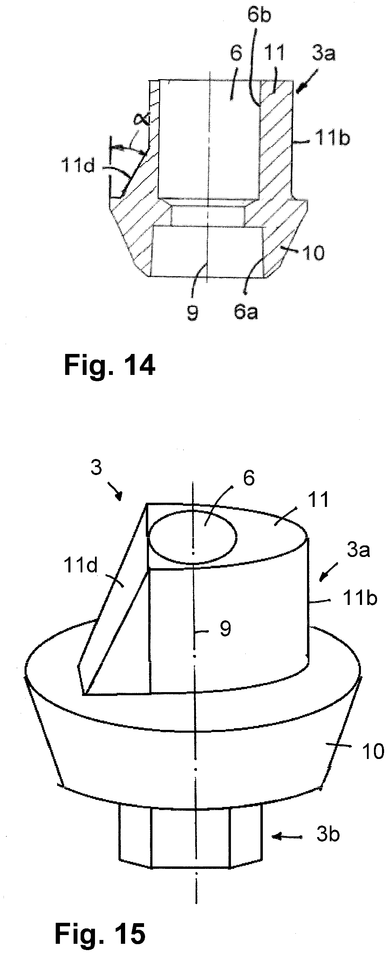

In Fig. 14 ist ein Primärkronenoberteil 3a in einer Ausführungsvariante dargestellt. Das Primärkronenoberteil 3a entspricht im Wesentlichen dem Ausführungsbeispiel gemäß Fig. 8, jedoch ist bei Fig. 14 die Ausgleichswand 11d, die eine Seitenwand des erhabenen Grundkörpers 11 bildet, axial verkürzt ausgebildet und endet mit axialem Abstand zur obenliegenden Stirnseite des Primärkronenoberteils 3a. Zwischen der abgeschrägten Ausgleichswand 11d, die einen Winkel α zur Längsachse 9 des Implantatoberteils 3a einnimmt, und der obenliegenden Stirnseite verläuft die Seitenwand des erhabenen Grundkörpers 11 parallel zur Längsachse 9. Die axiale Länge der abgeschrägten Ausgleichswand 11d und die axiale Länge der sich daran axial anschließenden Seitenwand bis zur freien Stirnseite sind annähernd gleich groß.

In Fig. 15 ist eine weitere Ausführungsvariante einer Primärkrone 3 mit Primärkronenoberteil 3a und Primärkronenunterteil 3b dargestellt. Der erhabene Grundkörper 11 weist eine abgeschrägte Ausgleichswand 11d auf, die in sich eben und geradflächig ausgebildet ist und unter einem Winkel zur Längsachse 9 der Primärkrone 3 von ca. 30° verläuft. Der erhabene Grundkörper 11 weist eine weitere Seitenwand 11b auf, die die Funktion einer Friktionsseitenwand hat und gebogen bzw. gekrümmt ausgebildet ist. Die Friktionsseitenwand 11b erstreckt sich über ein Winkelsegment von 180°. Die Querschnittsform der gekrümmten Friktionsseitenwand 11b entspricht einem halben Oval.

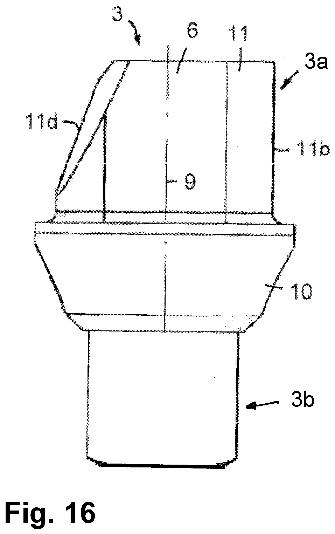

Im Ausführungsbeispiel gemäß Fig. 16 sind das Primärkronenoberteil 3a und das Primärkronenunterteil 3b der Primärkrone 3 einteilig ausgebildet. Das Primärkronenoberteil 3a entspricht demjenigen aus Fig. 4 und weist eine abgeschrägte Ausgleichswand 11d am erhabenen Grundkörper 11 auf. Das einteilig mit dem Primärkronenoberteil 3a ausgebildete Primärkronenunterteil 3b ist zylindrisch ausgebildet und kann entweder als Vollzylinder oder als Hohlzylinder ausgeführt sein. Die zylindrische Ausführung des Primärkronenunterteils 3b ermöglicht nach dem Einsetzen in einen Basisträger 2 (Fig. 1) ein Verdrehen der Primärkrone 3 um ihre Längsachse 9. Die zylindrische Mantelfläche des Primärkronenunterteils 3b kann mit ausreichender Führung und ausreichend festem Sitz in eine als Innenmehrkant ausgebildete Sacklochbohrung 8 im Basisträger 2 eingesetzt werden.

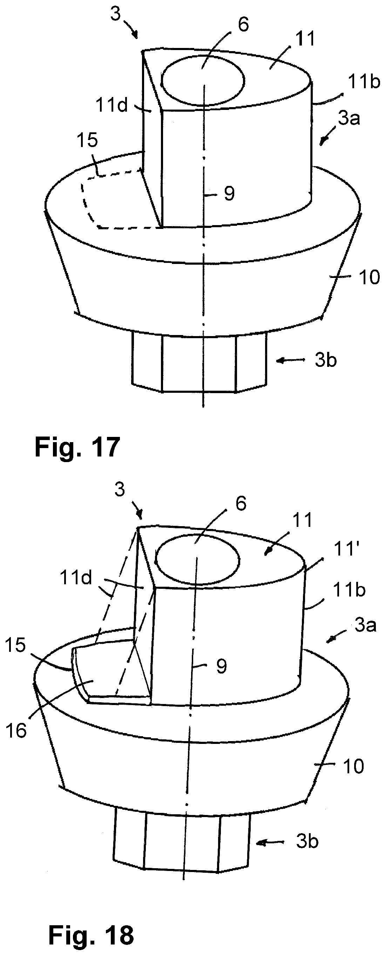

Das Ausführungsbeispiel der Primärkrone 3 gemäß Fig. 17 entspricht im Wesentlichen dem Ausführungsbeispiel gemäß Fig. 15. Auch bei Fig. 17 umfasst die Primärkrone 3 ein Primärkronenoberteil 3a und ein Primärkronenunterteil 3b, die als separate, jedoch miteinander zu verbindende Bauteile ausgeführt sind. Das Primärkronenoberteil 3a umfasst einen Sockel 10 und einen auf dem Sockel angeordneten, einteilig mit dem Sockel ausgebildeten und sich axial erhebenden Grundkörper 11, der eine geradflächige und in sich ebene Ausgleichswand 11d aufweist, welche parallel zur Längsachse 9 der Primärkrone 3 verläuft. An die geradflächige Ausgleichswand 11d schließt sich eine gekrümmte bzw. gebogene Seitenwand 11b an, die eine Friktionsseitenwand bildet und im Querschnitt in Form eines halben Ovals ausgeführt ist.

Unmittelbar benachbart zur Ausgleichwand 11d ist mit gestrichelter Linie ein Umriss 15 auf der Oberseite des Sockels 10 eingetragen, der gemeinsam mit der Querschnittsfläche des erhabenen Grundkörpers 11 die Querschnittsfläche der Ausnehmung im anderen Implantatteil - der Sekundärkrone - bildet. Dementsprechend weist die Ausnehmung in der Sekundärkrone ein größeres Volumen auf als der erhabene Grundkörper 11. Dadurch ist im Bereich des Umrisses 15 mit axialer Erstreckung bis zur Oberseite des Grundkörpers 11 ein Ausgleichsraum gebildet, wenn die Sekundärkrone 4 auf den Grundkörper 11 aufgesetzt ist. Dieser Ausgleichsraum ermöglicht es, dass die Sekundärkrone mit einer Aufsetzrichtung auf den erhabenen Grundkörper 11 aufgesetzt werden kann, die von der Längsachse 9 der Primärkrone 3 abweicht. Nach dem Aufsetzen kann die Sekundärkrone aufgrund des Ausgleichsraums oberhalb des Umrisses 15 um eine Querachse soweit verschwenkt werden, bis die endgültige Position der Sekundärkrone auf der Primärkrone 3 erreicht ist und insbesondere die Innenwand der Ausnehmung in der Sekundärkrone auf Reibkontakt zur Friktionsseitenwand 11b liegt. In dieser Position kann gegebenenfalls die Sekundärkrone parallel oder koaxial zur Längsachse 9 der Primärkrone 3 ausgerichtet sein, wenngleich auch Winkelabweichungen in der endgültigen Montageposition zwischen Sekundär- und Primärkrone möglich sind.

In Fig. 18 ist ein weiteres Ausführungsbeispiel einer Primärkrone 3 mit Primärkronenoberteil 3a und separat ausgeführtem Primärkronenunterteil 3b dargestellt, das in Verbindung mit dem Primärkronenoberteil 3a zu bringen ist. Der erhabene Grundkörper 11 auf dem Sockel 10 des Primärkronenoberteils 3a umfasst einen Hauptkörper 11', der identisch ausgebildet ist wie der Grundkörper 11 gemäß Fig. 17 und eine senkrechte, parallel zur Längsachse 9 verlaufende Ausgleichswand 11d und eine gebogene bzw. gekrümmte Friktionsseitenwand 11b umfasst. Zusätzlich umfasst der Grundkörper 11 ein Plateau 16, das sich axial über den Umriss 15 erhebt, welcher gemeinsam mit dem Umriss des Hauptkörpers 11' den Innenumfang der Ausnehmung in der Sekundärkrone bildet. Das Plateau 16 erhebt sich axial über die obenliegende Stirnseite des Sockels 10 und bildet gemeinsam mit dem Hauptkörper 11' den erhabenen Grundkörper 11. Das Plateau 16 weist jedoch eine signifikant geringere axiale Höhe auf als der Hauptkörper 11'. Aufgrund der geringeren axialen Höhe des Plateaus 16 ist oberhalb des Plateaus 16 und seitlich begrenzt vom Hauptkörper 11' ein Ausgleichsraum gegeben, der es ermöglicht, dass die Sekundärkrone unter einer Aufsetzrichtung auf den Grundkörper 11 aufgesetzt wird, die mit der Längsachse 9 der Primärkrone 3 einen Winkel ungleich 0° einschließt. Nach dem Aufsetzen kann die Sekundärkrone verschwenkt werden, bis die endgültige Position der Sekundärkrone auf der Primärkrone 3 erreicht ist. Das erhaben ausgeführte Plateau 16 erlaubt einen festen Sitz der Sekundärkrone auf dem Grundkörper 11 der Primärkrone 3.

Das Plateau 16 bildet zusammen mit der Ausgleichswand 11d eine den Ausgleichsraum zwischen dem Grundkörper 11 und der Ausnehmung in der Sekundärkrone begrenzende Ausgleichswand und ist zur Ausgleichswand 11d um 90° abgewinkelt.

Die Ausgleichswand 11d kann, wie mit gestrichelter Linie dargestellt ist, in einer Ausführungsvariante auch abgeschrägt ausgeführt sein und mit der Längsachse 9 einen Winkel einschließen, der beispielsweise maximal 30° beträgt.

## Patentansprüche

1. Zahnimplantat, mit zwei als Primärkrone (3) und Sekundärkrone (4) ausgebildeten Implantatteilen, die lösbar zu verbinden sind, wobei eines der beiden Implantatteile einen erhabenen Grundkörper (11) aufweist, der im verbundenen Zustand in eine Ausnehmung (12) im anderen der beiden Implantatteile hineinragt, wobei
die Primärkrone (3) oder ein Teil der Primärkrone (3) um ihre Längsachse (9) rotierbar anordenbar ist, um sie in verschiedenen Winkellagen einzustellen zu können,
**dadurch gekennzeichnet,**
**dass** der erhabene Grundkörper (11) eine rechteckige Querschnittsgeometrie aufweist und dass mindestens eine Seitenwand des erhabenen Grundkörpers (11) als eine abgeschrägte Ausgleichswand (11d) ausgebildet ist, die winklig zur Längsachse (9) des den erhabenen Grundkörper aufweisenden Implantatteils ausgerichtet ist und
die Querschnittsfläche des Grundkörpers (11) zu dessen Verbindungsbasis mit dem den erhabenen Grundkörper aufweisenden Implantatteil hin erweitert,
wobei mindestens eine weitere Seitenwand (11a, b, c) des Grundkörpers (11) einen Winkel zur Längsachse (9) des den erhabenen Grundkörper aufweisenden Implantatteils einschließt, der sich von dem Winkel der Ausgleichswand (lld) zur Längsachse (9) des den erhabenen Grundkörper aufweisenden Implantatteils unterscheidet.

2. Zahnimplantat nach Anspruch 1,
**dadurch gekennzeichnet,**
**dass** der Winkel der mindestens einen weiteren Seitenwand (11a, b, c) des Grundkörpers (11) zur Längsachse (9) des
den erhabenen Grundkörper aufweisenden Implantatteils in einem Winkelbereich von 2° bis 10° liegt.

3. Zahnimplantat nach Anspruch 1 oder 2,
**dadurch gekennzeichnet,**
**dass** mindestens eine Friktionsseitenwand (11a, b, c) des erhabenen Grundkörpers (11) reibschlüssig mit einer die Ausnehmung (12) im anderen der beiden Implantatteile begrenzenden Innenwand verbunden ist,
wobei eine oder mehrere weitere Seitenwände des erhabenen Grundkörpers (11) als eine Friktionsseitenwand (11a, 11b, 11c) ausgebildet sind, die parallel zur Längsachse (9) des den erhabenen Grundkörper aufweisenden Implantatteils liegt.

4. Zahnimplantat nach Anspruch 1,
**dadurch gekennzeichnet,**
**dass** der Winkel der abgeschrägten Ausgleichswand (lld) zur Längsachse (9) des den erhabenen Grundkörper aufweisenden Implantatteils mindestens 3° und maximal 30° beträgt.

5. Zahnimplantat nach einem der Ansprüche 1 bis 4,
**dadurch gekennzeichnet,**
**dass** die Grundform des Grundkörpers (11) als Quader ausgebildet ist, wobei die abgeschrägte Ausgleichswand (lld) an einer Schmalseite des Quaders angeordnet ist.

6. Zahnimplantat nach einem der Ansprüche 1 bis 5,
**dadurch gekennzeichnet,**
**dass** genau eine Seitenwand des erhabenen Grundkörpers (11) als eine abgeschrägte Ausgleichswand (lld) und alle weiteren Seitenwände des erhabenen Grundkörpers (11) jeweils als eine Friktionsseitenwand (11a, 11b, 11c) ausgebildet sind.

7. Zahnimplantat nach einem der Ansprüche 1 bis 6,
**dadurch gekennzeichnet,**
**dass** der Grundkörper (11) Teil der Primärkrone (3) ist.

8. Zahnimplantat nach einem der Ansprüche 1 bis 7,
**dadurch gekennzeichnet,**
**dass** die Primärkrone (3) ein der Sekundärkrone (4) zugewandtes Primärkronenoberteil (3a) und ein mit einem Basisträger (2) verbindbares Primärkronenunterteil (3b) umfasst, wobei das Primärkronenoberteil (3a) gegenüber dem Primärkronenunterteil (3b) rotierbar lagerbar ist.

9. Zahnimplantat nach Anspruch 8,
**dadurch gekennzeichnet,**
**dass** das Primärkronenoberteil (3a) und das Primärkronenunterteil (3b) einen ineinandergreifenden Innen- und Außenkonus aufweisen.

10. Zahnimplantat nach einem der Ansprüche 1 bis 7,
**dadurch gekennzeichnet,**
**dass** die Primärkrone (3) ein der Sekundärkrone (4) zugewandtes Primärkronenoberteil (3a) und Primärkronenunterteil (3b) umfasst, wobei das Primärkronenoberteil (3a) und das Primärkronenunterteil (3b) einteilig ausgebildet sind und das Primärkronenunterteil (3b) in einem Basisträger (2) rotierbar lagerbar ist.

## Claims

1. Dental implant having two implant parts in the form of a primary crown (3) and a secondary crown (4) that are to be detachably connected, wherein one of the two implant parts has a raised main body (11) which, in the connected state, protrudes into a recess (12) in the other of the two implant parts, wherein the primary crown (3) or a portion of the primary crown (3) is rotatably arrangeable about its longitudinal axis (9) in order to be able to set it in different angular positions,
**characterized in that**
the raised main body (11) has a rectangular cross-sectional geometry and **in that** at least one side wall of the raised main body (11) is in the form of a sloped compensation wall (11d) which is oriented at an angle to the longitudinal axis (9) of the implant part having the raised main body and extends the cross-sectional area of the main body (11) towards its connection base with the implant part having the raised main body, wherein at least one further side wall (11a, b, c) of the main body (11) forms an angle to the longitudinal axis (9) of the implant part having the raised main body, which angle differs from the angle of the compensation wall (11d) to the longitudinal axis (9) of the implant part having the raised main body.

2. Dental implant according to Claim 1,
**characterized in that**
the angle of the at least one further side wall (11a, b, c) of the main body (11) to the longitudinal axis (9) of the implant part having the raised main body is within an angular range from 2° to 10°.

3. Dental implant according to Claim 1 or 2,
**characterized in that**
at least one frictional side wall (11a, b, c) of the raised main body (11) is frictionally connected to an inner wall delimiting the recess (12) in the other of the two implant parts, wherein one or more further side walls of the raised main body (11) are in the form of a frictional side wall (11a, 11b, 11c) which is parallel to the longitudinal axis (9) of the implant part having the raised main body.

4. Dental implant according to Claim 1,
**characterized in that**
the angle of the sloped compensation wall (11d) to the longitudinal axis (9) of the implant part having the raised main body is at least 3° and at most 30°.

5. Dental implant according to any of Claims 1 to 4,
**characterized in that**
the basic shape of the main body (11) is in the form of a cuboid, wherein the sloped compensation wall (11d) is arranged on a narrow side of the cuboid.

6. Dental implant according to any of Claims 1 to 5,
**characterized in that**
exactly one side wall of the raised main body (11) is in the form of a sloped compensation wall (11d) and all of the further side walls of the raised main body (11) are each in the form of a frictional side wall (11a, 11b, 11c).

7. Dental implant according to any of Claims 1 to 6,
**characterized in that**
the main body (11) is part of the primary crown (3) .

8. Dental implant according to any of Claims 1 to 7,
**characterized in that**
the primary crown (3) comprises a primary crown top part (3a) which faces the secondary crown (4) and a primary crown bottom part (3b) which is connectable to a base support (2), wherein the primary crown top part (3a) is rotatably mountable with respect to the primary crown bottom part (3b).

9. Dental implant according to Claim 8,
**characterized in that**
the primary crown top part (3a) and the primary crown bottom part (3b) have an interlocking inner and outer cone.

10. Dental implant according to any of Claims 1 to 7,
**characterized in that**
the primary crown (3) comprises a primary crown top part (3a) and primary crown bottom part (3b) facing the secondary crown (4), wherein the primary crown top part (3a) and the primary crown bottom part (3b) are in the form of one piece and the primary crown bottom part (3b) is rotatably mountable in a base support (2).

## Revendications

1. Implant dentaire comprenant deux parties d'implant qui sont conçues comme une couronne primaire (3) et une couronne secondaire (4) et qui peuvent être reliées de manière amovible, l'une des deux parties d'implant comportant un corps de base surélevé (11) qui, lorsqu'il est relié, fait saillie dans un évidement (12) ménagé dans l'autre des deux parties d'implant,
la couronne primaire (3) ou une partie de la couronne primaire (3) pouvant être disposée de manière rotative autour de son axe longitudinal (9) afin de pouvoir être réglée dans différentes positions angulaires, **caractérisé en ce que**
le corps de base surélevé (11) a une géométrie rectangulaire en coupe transversale et au moins une paroi latérale du corps de base surélevé (11) est conçue comme une paroi de compensation biseautée (lld) qui est orientée angulairement par rapport à l'axe longitudinal (9) de la partie d'implant comportant le corps de base surélevé et
la surface en coupe transversale du corps de base (11) s'élargit en direction de la base de liaison de celui-ci avec la partie d'implant comportant le corps de base surélevé,
au moins une autre paroi latérale (11a, b, c) du corps de base (11) formant un angle par rapport à l'axe longitudinal (9) de la partie d'implant comportant le corps de base surélevé, lequel angle diffère de l'angle de la paroi de compensation (lld) par rapport à l'axe longitudinal (9) de la partie d'implant comportant le corps de base surélevé.

2. Implant dentaire selon la revendication 1,
**caractérisé en ce que**
l'angle de l'au moins une autre paroi latérale (11a, b, c) du corps de base (11) par rapport à l'axe longitudinal (9) de la partie d'implant comportant le corps de base surélevé est situé dans une plage angulaire allant de 2° à 10°.

3. Implant dentaire selon la revendication 1 ou 2,
**caractérisé en ce que**
au moins une paroi latérale de friction (11a, b, c) du corps de base surélevé (11) est reliée par friction à une paroi intérieure délimitant l'évidement (12) ménagé dans l'autre des deux parties d'implant,
une ou plusieurs autres parois latérales du corps de base surélevé (11) étant conçues comme une paroi latérale de friction (11a, 11b, 11c) parallèle à l'axe longitudinal (9) de la partie d'implant comportant le corps de base surélevé.

4. Implant dentaire selon la revendication 1,
**caractérisé en ce que**
l'angle de la paroi de compensation biseautée (lld) par rapport à l'axe longitudinal (9) de la partie d'implant comportant le corps de base surélevé est d'au moins 3° et d'au plus 30°.

5. Implant dentaire selon l'une des revendications 1 à 4,
**caractérisé en ce que**
la forme de base du corps de base (11) est conçue comme un cuboïde, la paroi de compensation biseautée (lld) étant disposée sur un petit côté étroit du cuboïde.

6. Implant dentaire selon l'une des revendications 1 à 5,
**caractérisé en ce que**
exactement une paroi latérale du corps de base surélevé (11) est conçue comme une paroi de compensation biseautée (lld) et toutes les autres parois latérales du corps de base surélevé (11) sont chacune conçues comme une paroi latérale de friction (11a, 11b, 11c).

7. Implant dentaire selon l'une des revendications 1 à 6,
**caractérisé en ce que**
le corps de base (11) fait partie de la couronne primaire (3).

8. Implant dentaire selon l'une des revendications 1 à 7,
**caractérisé en ce que**
la couronne primaire (3) comprend une partie de couronne primaire supérieure (3a) tournée vers la couronne secondaire (4) et une partie de couronne primaire inférieure (3b) pouvant être reliée à un support de base (2), la partie de couronne primaire supérieure (3a) pouvant être montée de manière rotative par rapport à la partie de couronne primaire inférieure (3b) .

9. Implant dentaire selon la revendication 8,
**caractérisé en ce que**
la partie de couronne primaire supérieure (3a) et la partie de couronne primaire inférieure (3b) comportent un cône intérieur et un cône extérieur emboîtables l'un dans l'autre.

10. Implant dentaire selon l'une des revendications 1 à 7,
**caractérisé en ce que**
la couronne primaire (3) comprend une partie de couronne primaire supérieure (3a) et une partie de couronne primaire inférieure (3b) tournée vers la couronne secondaire (4), la partie de couronne primaire supérieure (3a) et la partie de couronne primaire inférieure (3b) étant construites d'une seule pièce et la partie de couronne primaire inférieure (3b) pouvant être logée de manière rotative dans un support de base (2) .
